(19) Europäisches Patentamt
European Patent Office
Office européen des brevets

(11) **EP 2 872 368 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **13762777.4**

(22) Anmeldetag: **09.09.2013**

(51) Int Cl.:
**B60T 8/18** (2006.01)  **B60T 8/172** (2006.01)

(86) Internationale Anmeldenummer:
**PCT/EP2013/068601**

(87) Internationale Veröffentlichungsnummer:
**WO 2014/040949 (20.03.2014 Gazette 2014/12)**

(54) **VERFAHREN ZUM ABBREMSEN EINES FAHRZEUGS**

METHOD FOR DECELERATING A VEHICLE

PROCÉDÉ POUR LE FREINAGE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2012 DE 102012216315**

(43) Veröffentlichungstag der Anmeldung:
**20.05.2015 Patentblatt 2015/21**

(73) Patentinhaber: **Siemens Mobility GmbH**
**81739 München (DE)**

(72) Erfinder:
• **BATZ, Ferdinand**
**Sacramento, CA 95816 (US)**
• **STURM, Daniel**
**90766 Fürth (DE)**

(56) Entgegenhaltungen:
WO-A1-03/029764      DE-A1- 3 929 497
DE-A1- 19 837 380    DE-A1-102006 022 171
DE-B3-102006 011 963 DE-B3-102006 025 329
US-A- 5 735 579      US-B1- 6 249 735

EP 2 872 368 B1

**Beschreibung**

Die Erfindung betrifft ein Fahrzeug und ein Verfahren zum Betreiben des Fahrzeugs.

DIN 13452-1 legt einen Grenzwert für eine Beschleunigungsänderung während einer Betriebsbremsung eines Schienenfahrzeugs des Personennahverkehrs bei 1,5 m/s$^3$ fest. Größere Beschleunigungsänderungen nehmen Fahrgäste als Ruck wahr. Um den geforderten Ruckgrenzwert einzuhalten, wird eine Bremskraftänderung bei einem leeren Fahrzeug so eingestellt, dass der Ruckgrenzwert gerade erreicht wird. Wird die Bremskraftänderung nicht beladungsabhängig angepasst, so wird der Grenzwert bei einem beladenen Fahrzeug unterschritten. Ein beladenes Fahrzeug weist somit einen im Vergleich zum leeren Fahrzeug auch bei Korrektur der maximalen Bremskraft proportional zum Beladungsgewicht einen verlängerten Bremsweg auf.

Die Druckschriften US 6 249 735 B1, WO 03/029764 A1 und DE 10 2006 025 329 B3 offenbaren Verfahren zum Bestimmen einer Bremskraft eines Fahrzeugs in Abhängigkeit der Fahrzeugmasse.

Der Erfindung liegt die Aufgabe zugrunde, den Bremsweg eines Fahrzeugs zu verringern, bei gleichzeitigem Einhalten eines vorgegebenen Grenzwerts für die Beschleunigungsänderung beim Abbremsvorgang.

Gelöst wird die Aufgabe durch die Gegenstände der unabhängigen Patentansprüche 1 und 11. Weiterbildungen und Ausgestaltungen der Erfindung finden sich in den Merkmalen der abhängigen Patentansprüche wieder.

Ein erfindungsgemäßes Verfahren zum Betreiben eines Fahrzeugs, insbesondere eines Schienenfahrzeugs des Personenverkehrs, insbesondere des Personennahverkehrs umfasst die Verfahrensschritte:

- Ermitteln der aktuellen Gesamtmasse des Fahrzeugs in Abhängigkeit von:

    - einer Beschleunigung des Fahrzeugs, und
    - einer zur Beschleunigung des Fahrzeugs aufgewandten Zugkraft;

- Aufbau und/oder Abbau einer Bremskraft zum Abbremsen des Fahrzeugs in Abhängigkeit von seiner Gesamtmasse.

Aus der auf das Fahrzeug einwirkenden Zugkraft resultiert die Beschleunigung des Fahrzeugs. Die Bremskraft wird zumindest am Anfang und am Ende des Abbremsvorgangs zeitlich verändert. Die zeitliche Veränderung der Bremskraft erfolgt in Abhängigkeit von der ermittelten Gesamtmasse des Fahrzeugs. Dabei wird die Bremskraft insbesondere so auf- und/oder abgebaut, dass ein vorgegebener Grenzwert für einen Ruck nicht überschritten wird.

Bei der Gesamtmasse des Fahrzeugs handelt es sich um das Gesamtgewicht des Fahrzeugs zum Zeitpunkt des Ermittelns multipliziert mit der örtlichen Erdbeschleunigung. Die Gesamtmasse setzt sich zusammen aus der Leermasse des Fahrzeugs und der Masse der Zuladung. Die Beschleunigung ist beliebig vorgegeben.

Natürlich können weitere Parameter bei der Ermittlung der Gesamtmasse Berücksichtigung finden. Daher erfolgt gemäß einer ersten Weiterbildung der Erfindung das Ermitteln der Gesamtmasse des Fahrzeugs abhängig von auf äußeren Kräften, welche auf das Fahrzeug einwirken. Dies sind insbesondere auf das Fahrzeug einwirkende Gewichtskräfte und/oder
auf das Fahrzeug einwirkende Reibungskräfte. Äußere Kräfte werden auch als eingeprägte Kräfte bezeichnet.

Zu den auf das Fahrzeug einwirkenden Gewichtskräften zählt insbesondere eine auf das Fahrzeug einwirkende Hangabtriebskraft. Steht das Fahrzeug auf einer schiefen Ebene, ist zur vorgegebenen Beschleunigung des Fahrzeugs eine um die Hangabtriebskraft bergan vergrößerte bzw. bergab minimierte Kraft aufzubringen. Reibungskräfte sind beispielsweise eine auf das Fahrzeug einwirkende Rollreibungskraft und/oder eine auf das Fahrzeug einwirkende Strömungswiderstandskraft.

Die Rollreibungskraft entsteht beispielsweise zwischen den Rädern des Fahrzeugs und Schienen, auf welchen sich das Fahrzeug bewegt. Insbesondere bei einer Bogen- oder Kurvenfahrt ist diese Rollreibungskraft erhöht, da ein Spurkranz eines oder mehrerer kurvenäußerer Räder des Fahrzeugs gegen eine Flanke einer kurvenäußeren Schiene des Gleises schlagen kann, auf welchem sich das Fahrzeug durch die Kurve bewegt. Auch bei gerader Strecke kann ein Spurkranz eines Rades des Fahrzeugs gegen eine Flanke einer Schiene des Gleises des Fahrzeugs schlagen, insbesondere dann, wenn das Fahrzeug stark schlingert. Sowohl die Hangabtriebskraft, als auch die Rollreibung hängen von der Gesamtmasse des Fahrzeugs ab. Der Strömungswiderstand eines Fahrzeugs hingegen hängt von der Geschwindigkeit des Fahrzeugs gegenüber der das Fahrzeug umgebenen Luft ab. Er ist unabhängig von der Gesamtmasse des Fahrzeugs.

Zur Ermittlung der Hangabtriebskraft und/oder der Rollreibung weist das Schienenfahrzeug beispielsweise einen GPS-Empfänger auf, um die Position des Schienenfahrzeugs zu ermitteln. In einem Speicher des Fahrzeugs sind Streckendaten mit Neigungswinkeln und/oder Kurvenradien hinterlegt. Darüber hinaus weist das Fahrzeug dann eine Rechnereinheit zur Auswertung der Streckendaten auf. Alternativ kann zur Ermittlung der Neigung auch ein Neigungssensor vorgesehen sein und/oder zur Ermittlung des Radius' einer Kurve ist ein Querbeschleunigungssensor vorgesehen.

Wird ein Fahrzeug aus dem Stand beschleunigt, muss zunächst eine Losbrechkraft überwunden werden. Weitergebildet wird zur Ermittlung der Gesamtmasse des Fahrzeugs die für die Beschleunigung aufgewandte Zugkraft bei einem Beschleunigungsvorgang aus dem Stand des Fahrzeugs heraus ermittelt, insbesondere nachdem die Losbrechkraft überwunden wurde, beispielsweise nachdem das Fahrzeug eine vorgegebene Mindestgeschwindigkeit, z.B. 2km/h, überschritten hat. Die Ermittlung der für die Beschleunigung aufgewandte Zugkraft endet beispielsweise beim Erreichen oder Überschreiten einer vorgegebenen Höchstgeschwindigkeit oder nach einer vorgegebenen Dauer der Beschleunigung. Ein typisches Zeitfenster dafür beträgt z.B. 3,5 s. Wiederholt wird dieser Vorgang weiterbildungsgemäß bei jedem erneuten Beschleunigungsvorgang aus dem Stand, wenn sich Türen des Fahrzeugs im Stand geöffnet haben. Dadurch ist es möglich, dass sich die Zuladung des Fahrzeugs ändert. Bleiben die Türen geschlossen, ändert sich die Zuladung des Fahrzeugs üblicherweise nicht.

Ermittelt wird die zur Beschleunigung des Fahrzeugs aufgewandte Zugkraft insbesondere abhängig von dem abgegebenen Motormoment der Antriebsmotoren des Fahrzeugs. Das Antriebsmoment eines Antriebsmotors ist beispielsweise anhand seines Motorstroms ablesbar. Alternativ wird die zur Beschleunigung des Fahrzeugs aufgewandte Zugkraft durch die Stellung eines Fahrhebels des Fahrzeugs vorgegeben. Die Beschleunigung selbst kann aus der Änderung der Geschwindigkeit eines Signals eines Drehzahlgebers an einem Laufwerk des Fahrzeugs erfolgen.

Überschreitet die Gesamtmasse des Fahrzeugs einen vorgegebenen Schwellwert kann ein Signal ausgegeben werden, insbesondere an den Fahrzeugführer. Des Weiteren kann mittels der momentanen Gesamtmasse die Masse der Zuladung errechnet und gegebenenfalls ausgegeben werden, wenn die Leermasse des Fahrzeugs bekannt ist. In Abhängigkeit von der Zuladung lässt sich die Anzahl der beförderten Fahrgäste abschätzen und gegebenenfalls ausgegeben. Die Leermasse ist entweder vorgegeben oder wird im leeren Zustand des Fahrzeugs, z.B. beim Ausfahren aus dem Depot, erfindungsgemäß ermittelt und in einem Speicher hinterlegt.

Zu Beginn und/oder am Ende des Abbremsvorganges des Fahrzeugs wird eine Bremskraft zum Abbremsen des Fahrzeugs in Abhängigkeit von dessen Gesamtmasse über die Zeit angehoben und/oder abgesenkt, wobei die zeitliche Änderung der Bremskraft in einem Intervall vorgegebener, konstanter Größe liegt, mit einem Höchstwert und einem zum Höchstwert proportionalen Mindestwert als Intervallgrenzen, wobei der Höchstwert mit steigender Gesamtmasse des Fahrzeugs zunimmt. Der Abstand von Höchst- und Mindestwert ist vorgegeben. Die Lage des Intervalls ist abhängig von der Gesamtmasse des Fahrzeugs.

Ziel ist, die zeitliche Änderung der Bremskraft zum Abbremsen des Fahrzeugs so zu wählen, dass der Ruck, also die zeitliche Änderung der auf die Fahrgäste wirkenden Beschleunigung, nahezu konstant auf dem erlaubten Maximalwert gehalten wird, also z.B. in einem vorgegebenen Intervall zwischen 1,4 m/s$^3$ und 1,5 m/s$^3$. Der Mindestwert dieses vorgegebenen Intervalls ist dabei größer Null, der Höchstwert wird z.B. aus der Norm übernommen.

Die Bremskraft wird erfindungsgemäß über die Zeit während des Bremsvorgangs näherungsweise linear angehoben und/oder abgesenkt. Die Steigung der Geraden der Bremskraft aufgetragen über der Zeit ist im Wesentlichen proportional zur momentanen Gesamtmasse des Fahrzeugs. Sie wird insbesondere vor jedem Abbremsen bzw. nach jedem Ermitteln der Gesamtmasse des Fahrzeugs, also insbesondere nach einer Änderung der Gesamtmasse des Fahrzeugs neu errechnet.

Um das erfindungsgemäße Verfahren auszuführen, umfasst ein erfindungsgemäßes Fahrzeug, insbesondere ein Schienenfahrzeug des Personennahverkehrs eine Rechnereinheit, welche geeignet und entsprechend ausgestaltet ist, eine momentane Gesamtmasse des Schienenfahrzeugs in Abhängigkeit von einer beliebigen, vorgegebenen Beschleunigung des Schienenfahrzeugs und von einer zur Beschleunigung des Schienenfahrzeugs aufgewandten Zugkraft zu errechnen. Darüber hinaus ist die Rechnereinheit dazu geeignet, eine Bremskraft zum Abbremsen des Fahrzeugs, insbesondere eine zeitliche Veränderung der Bremskraft - einen Aufbau und/oder Abbau der Bremskraft und entsprechend einen damit einhergehenden Bremskraftanstieg und/oder Bremskraftabfall - in Abhängigkeit von der Gesamtmasse des Schienenfahrzeugs zu errechnen. Die Bremsanlage des Schienenfahrzeugs ist entsprechend geeignet, das Schienenfahrzeug in Abhängigkeit der von der Rechnereinheit errechneten, momentanen Gesamtmasse des Schienenfahrzeugs abzubremsen und dazu die von der Rechnereinheit errechnete Bremskraft aufzubringen, insbesondere den von der Rechnereinheit errechneten zeitlichen Aufbau und/oder Abbau der Bremskraft auszuführen.

Die Erfindung lässt zahlreiche Ausführungsformen zu. Sie wird anhand des nachfolgenden Ausgestaltungsbeispiels näher erläutert.

Die momentane Beschleunigung a des Fahrzeugs mit einer vorgegebenen Mindestgeschwindigkeit $v_{min}$ ergibt sich aus:

$$a = \frac{F_Z - F_W - F_H - F_K}{m_{leer} * (1 + k_{rot}) + m_{Zul}} \quad (1)$$

, (1), mit der Zugkraft $F_Z$, dem Fahrwiderstand $F_W$, der Hangabtriebskraft $F_H$, dem Bogenwiderstand $F_K$, der Leermasse $m_{leer}$, der Zuladung $m_{Zul}$ und dem Anteil der rotierenden Massen an der Leermasse des Fahrzeugs $k_{rot}$.

$v_{min}$ beträgt dabei beispielsweise ungefähr 2-3 km/h. Bei einer Geschwindigkeit $v < v_{min}$ des Fahrzeugs müsste gegebenenfalls die sogenannte Losbrechkraft berücksichtigt werden.

$F_W$ ist abhängig von der Rollreibung $F_R = (m_{leer} + m_{Zul})*\mu*g*\sin\alpha$, mit dem Reibungskoeffizienten $\mu$, und vom Strömungswiderstand des Fahrzeugs. Der Fahrwiderstand ist abhängig vom Fahrzeug. Für ihn gilt näherungsweise, abgeleitet aus der Davis Formel: $F_W = (m_{leer}+m_{Zul})*(k_1+k_2*v)+k_3*v^2$ (2). $k_1$ bis $k_3$ sind Fahrzeugspezifische Fahrwiderstandskonstanten, welche beispielsweise in einem Ausrollversuch ermittelt oder einfach geschätzt wurden, v ist die momentane Geschwindigkeit des Fahrzeugs. Hinterlegt sind die Koeffizienten in einem dafür geeigneten Speicher des Fahrzeugs.

Für $F_H$ gilt hingegen: $F_H = (m_{leer}+m_{Zul})*g*\sin\alpha$ (3), mit g der Gravitation und $\alpha$ dem Neigungswinkel der Strecke unter dem Fahrzeug. $F_H$ ist somit abhängig vom der momentanen Gesamtmasse des Fahrzeugs. $\alpha$ ist positiv bei einer ansteigenden Strecke in Fahrtrichtung des Fahrzeugs.

Der Bogenwiderstand $F_K$ ist z.B. abhängig von der Spurweite, der Gesamtmasse des Fahrzeugs und dem Kurvenradius. Er ist bei geraden Anfahrstrecken nach Haltestellen zu vernachlässigen.

Aus Gleichung (1) ergibt sich somit

$$m_{Zul}(a,v,F_Z,\alpha) = \frac{-a*m_{leer}*k_{rot}+F_Z-k_3*v^2}{a+k_1+k_2*v-g*\sin\alpha} - m_{leer} \quad (4)\ .$$

Die aktuelle Geschwindigkeit/Momentangeschwindigkeit des Fahrzeugs v > $v_{min}$ wird beispielsweise bei bekanntem Raddurchmesser über einen Drehzahlgeber ermittelt. Alternativ können auch hierfür GPS-Daten herangezogen werden. Weitere Methoden der Ermittlung einer Geschwindigkeit eines Fahrzeugs sind bekannt und hiermit umfasst. Anschließend wird daraus die Beschleunigung a ermittelt. Die angeforderte Zugkraft $F_Z$ ist beispielsweise aus der Auslenkung eines Fahrhebels bekannt. Der Neigungswinkel $\alpha$ ist aus einer Streckendatenbank über GPS-Daten auszulesen.

Natürlich gelten die aufgestellten Formeln nur bis zu einer vorgebbaren Höchstgeschwindigkeit $v_{max}$ << der Lichtgeschwindigkeit c, beispielsweise bis $v_{max}$ < 1000km/h. Ein Schienenfahrzeug des Personennahverkehrs erreicht üblicherweise Höchstgeschwindigkeiten kleiner 200 km/h.

Um den Ruck unter einem vorgegebenen Grenzwert zu halten, wird die Abbremsung eines Schienenfahrzeugs daher entsprechend langsam eingeleitet, indem die Bremskraft nur langsam angehoben wird. Darüber hinaus wird die Abbremsung langsam ausgeleitet, indem die Bremskraft gegen Abschluss der Abbremsung langsam verringert wird. Durch das erfindungsgemäße Verfahren lässt sich die Bremskraft so einstellen, dass die Abbremsung mit einer Bremsbeschleunigungsänderung nahe am Grenzwert erfolgt.

Ist das Gesamtgewicht des Fahrzeugs hingegen unbekannt, wird üblicherweise die Abbremsung so ein- und/oder ausgeleitet indem die Bremskraft so erhöht und/oder verringert wird, dass der vorgegebene Höchstwert für die Bremsbeschleunigungsänderung lediglich bei einem leeren Fahrzeug erreicht wird, da Bremskraft bei bekannter Leermasse des leeren Fahrzeugs eingestellt wird. Ist das Fahrzeug jedoch beladen, wodurch sich die Masse des Fahrzeugs erhöht, resultiert daraus eine Verlängerung des Bremswegs gegenüber einer Bremsung mit Erreichen des vorgegebenen Grenzwerts für die Bremsbeschleunigungsänderung.

Für den Ruck R gilt: $R = \dfrac{da}{dt}$ . Er ist abhängig von der Gesamtmasse des Fahrzeugs und von der Bremskraftänderung $dF_B/dt$. Um den Ruck konstant zu halten, beispielsweise bei bevorzugten $R_{max}$ = 1,3 m/s³, muss die zeitliche Bremskraftänderung zuladungsabhängig angepasst werden. Unter der Annahme, dass während des Bremskraftaufbaus und/oder des Bremskraftabbaus während der Ein- und/oder Ausleitung eines Abbremsvorgangs, keine signifikante Änderungen von Fahrwiderstand, Hangabtriebskraft oder Bogenwiderstand auftreten gilt:

$$\frac{da}{dt} = \frac{-dF_B/dt}{m_{leer}*(1+k_{rot})+m_{Zul}} \quad (5)\ .$$

(5). Ist die Gesamtmasse des Fahrzeugs ermittelt worden, kann die zeitliche Änderung der Bremskraft so eingestellt werden, dass der Grenzwert $R_{max} = \dfrac{da_{max}}{dt}$ erreicht wird.

$$dF_B/dt = -\frac{da_{max}}{dt}*(m_{leer}*(1+k_{rot})+m_{Zul})$$

kann für alle Abbremsvorgänge beibehalten werden, bis sich die Türen öffnen und Passagiere aus- oder zusteigen und sich somit die Zuladung und daher auch die Gesamtmasse des Fahrzeugs ändert.

**Patentansprüche**

1. Verfahren zum Betreiben eines Fahrzeugs, das folgende Verfahrensschritte aufweist:

    - Ermitteln der Gesamtmasse des Fahrzeugs in Abhängigkeit von:

        - einer Beschleunigung des Fahrzeugs, und
        - einer zur Beschleunigung des Fahrzeugs aufgewandten Zugkraft;

    - Aufbau und/oder Abbau einer Bremskraft zum Abbremsen des Fahrzeugs in Abhängigkeit von seiner Gesamtmasse,

    **dadurch gekennzeichnet, dass**
    die Bremskraft über die Zeit linear angehoben oder abgesenkt wird, wobei die Steigung proportional zur Gesamtmasse des Fahrzeugs ist.

2. Verfahren nach Anspruch 1, **dadurch gekennzeichnet, dass** das Ermitteln der Gesamtmasse des Fahrzeugs in weiterer Abhängigkeit erfolgt von:

    - auf das Fahrzeug einwirkende, äußere Kräfte.

3. Verfahren nach Anspruch 2, **dadurch gekennzeichnet, dass** das Ermitteln der Gesamtmasse des Fahrzeugs in Abhängigkeit erfolgt von:

    - auf das Fahrzeug einwirkende Gewichtskräfte, und/oder
    - auf das Fahrzeug einwirkende Reibungskräfte.

4. Verfahren nach einem der Ansprüche 1 bis 3, **dadurch gekennzeichnet, dass** zum Ermitteln der aktuellen Gesamtmasse des Fahrzeugs die Leermasse $m_{leer}$ des Fahrzeugs bekannt ist und die aktuelle Zuladung $m_{Zul}$ nach folgender Formel errechnet wird: $m_{Zul}(a,v,F_Z,\alpha) = \dfrac{-a * m_{leer} * k_{rot} + F_Z - k_3 * v^2}{a + k_1 + k_2 * v - g * \sin\alpha} - m_{leer}$ , mit der Beschleunigung a, der Zugkraft $F_Z$, dem bekannten Anteil der rotierenden Massen an der Leermasse des Fahrzeugs $k_{rot}$, der momentanen Geschwindigkeit v des Fahrzeugs, dem Neigungswinkel der Strecke $\alpha$, der Gravitation g und bekannten fahrzeugspezifischen Fahrwiderstandskonstanten $k_1$ bis $k_3$.

5. Verfahren nach einem der Ansprüche 1 bis 4, **dadurch gekennzeichnet, dass** der Aufbau und/oder Abbau einer Bremskraft zum Abbremsen des Fahrzeugs nach folgender Formel erfolgt: $\dfrac{dF_B}{dt} = -\dfrac{da_{max}}{dt} * (m_{leer} * (1 + k_{rot}) + m_{Zul})$ , mit der bekannten Leermasse $m_{leer}$ des Fahrzeugs, dem bekannten Anteil der rotierenden Massen an der Leermasse des Fahrzeugs $k_{rot}$, der aktuelle Zuladung $m_{Zul}$ und dem vorgegebenen Ruck-Grenzwert $\dfrac{da_{max}}{dt}$.

6. Verfahren nach einem der Ansprüche 1 bis 5, **dadurch gekennzeichnet, dass** das Ermitteln der aktuellen Gesamtmasse des Fahrzeugs bei einem Beschleunigungsvorgang aus dem Stand des Fahrzeugs heraus erfolgt.

7. Verfahren nach einem der Ansprüche 1 bis 6, **dadurch gekennzeichnet, dass** das Ermitteln der zur Beschleunigung des Fahrzeugs aufgewandten Zugkraft in Abhängigkeit von der Stellung eines Fahrhebels des Fahrzeugs abgeleitet wird.

8. Verfahren nach einem der Ansprüche 1 bis 7, **dadurch gekennzeichnet, dass** das Ermitteln der zur Beschleunigung des Fahrzeugs aufgewandten Zugkraft in Abhängigkeit eines Motorstroms eines Motors des Fahrzeugs erfolgt.

9. Verfahren nach einem der Ansprüche 1 bis 8, **dadurch gekennzeichnet, dass** bei Überschreiten eines vorgegebenen Schwellwerts für eine vorgegebene Gesamtmasse des Fahrzeugs ein Signal ausgegeben wird.

**Claims**

1.  Method for the operation of a vehicle, having the following process steps:

    - determining the total weight of the vehicle depending on:

        - an acceleration of the vehicle, and
        - a tractive force expended for the acceleration of the vehicle;

    - the build-up and/or reduction of a brake force for decelerating the vehicle depending on its total weight, **characterized in that** the brake force is increased or decreased linearly with time, wherein the gradient is proportional to the total weight of the vehicle.

2.  Method according to Claim 1, **characterized in that** the determination of the total weight of the vehicle also takes place depending on:

    - external forces acting on the vehicle.

3.  Method according to Claim 2, **characterized in that** the determination of the total weight of the vehicle takes place depending on:

    - gravitational forces acting on the vehicle and/or
    - frictional forces acting on the vehicle.

4.  Method according to any one of Claims 1 to 3, **characterized in that** for determining the current total weight of the vehicle the empty weight $m_{empty}$ of the vehicle is known and the current load $m_{load}$ is calculated according to the following formula:

$$m_{load}(a,v,F_Z,\alpha) = \frac{-a * m_{empty} * k_{rot} + F_Z - k_3 * v^2}{a + k_1 + k_2 * v - g * \sin\alpha} - m_{empty},$$

    with the acceleration a, the tractive force Fz, the known component of the rotating weight of the empty weight of the vehicle $k_{rot}$, the current speed of the vehicle v, the slope angle of the track $\alpha$, the acceleration due to gravity g and the known vehicle-specific running resistance constants $k_1$ through $k_3$.

5.  Method accoridng to any one of Claims 1 to 4, **characterized in that** the build-up and/or reduction of a brake force for decelerating the vehicle takes place according to the following formula $$dF_B\Big/dt = -\frac{da_{max}}{dt} * (m_{empty} * (1 + k_{rot}) + m_{load})$$ with the known empty weight $m_{empty}$ of the vehicle, the known component of the rotating weight in the empty weight of the vehicle $k_{rot}$, the current load $m_{load}$ and the specified jolt limit value $\dfrac{da_{max}}{dt}$.

6.  Method according any one of Claims 1 to 5, **characterized in that** the determination of the current total weight of the vehicle during an acceleration process takes place from when the vehicle is at rest.

7.  Method according to any one of Claims 1 to 6, **characterized in that** the determination of the tractive force expended for the acceleration of the vehicle is derived depending on the position of a control lever of the vehicle.

8.  Method according to any one of Claims 1 to 7, **characterized in that** the determination of the tractive force expended for the acceleration of the vehicle takes place depending on a motor current of a motor of the vehicle.

9. Method accoridng to any one of Claims 1 to 8, **characterized in that** a signal is output on exceeding a specified threshold value for a specified total weight of the vehicle.

**Revendications**

1. Procédé pour faire fonctionner un véhicule, qui a les stades de procédé suivants :

   - détermination de la masse totale du véhicule en fonction :

     - d'une accélération du véhicule et
     - d'une force de traction appliquée pour accélérer le véhicule ;

   - établissement et/ou suppression d'une force de frein pour freiner le véhicule en fonction de sa masse totale,

   **caractérisé en ce que**
   on augmente ou on diminue linéairement en fonction du temps la force de frein, la pente étant proportionnelle à la masse totale du véhicule.

2. Procédé suivant la revendication 1, **caractérisé en ce que** la détermination de la masse totale du véhicule s'effectue, en outre, en fonction :

   - de forces extérieures s'appliquant au véhicule.

3. Procédé suivant la revendication 2, **caractérisé en ce que** la détermination de la masse totale du véhicule s'effectue en fonction :

   - de forces pondérales s'appliquant au véhicule et/ou
   - de forces de frottement s'appliquant au véhicule.

4. Procédé suivant l'une des revendications 1 à 3, **caractérisé en ce que**, pour déterminer la masse totale présente du véhicule, la masse $m_{leer}$ à vide du véhicule est connue et on calcule la charge $m_{Zul}$ utile présente par la formule suivante :

$$m_{Zul}(a, v, F_Z, \alpha) = \frac{-a * m_{leer} * k_{rot} + F_z - k_3 * v^2}{a + k_1 + k_2 * v - g * \sin\alpha} - m_{leer},$$

avec l'accélération a, la force $F_z$ de traction, la proportion connue des masses tournantes par rapport à la masse à vide du véhicule $k_{rot}$, la vitesse v instantanée du véhicule, l'angle d'inclinaison de la voie a, la constante de gravité g et des constantes $k_1$ à $k_3$ à l'avancement spécifiques au véhicule connues.

5. Procédé suivant l'une des revendications 1 à 4, **caractérisé en ce que** l'établissement et/ou la suppression d'une force de frein pour freiner le véhicule s'effectue selon la formule suivante :

$$dF_B/dt = -\frac{da_{max}}{dt} * (m_{leer} * (1 + k_{rot}) + m_{Zul}),$$

avec la masse $m_{leer}$ à vide connue du véhicule, la proportion connue des masses tournantes par rapport à la masse à vide du véhicule $k_{rot}$, la charge $m_{Zul}$ présente et la valeur $\frac{da_{max}}{dt}$ limite de secousse donnée à l'avance.

6. Procédé suivant l'une des revendications 1 à 5, **caractérisé en ce que** la détermination de la masse totale présente du véhicule s'effectue pour une opération d'accélération à partir de l'état du véhicule.

7. Procédé suivant l'une des revendications 1 à 6, **caractérisé en ce que** l'on déduit la détermination de la force de traction appliquée pour accélérer le véhicule en fonction de la position d'un levier de conduite du véhicule.

8. Procédé suivant l'une des revendications 1 à 7, **caractérisé en ce que** la détermination de la force de traction appliquée pour l'accélération du véhicule s'effectue en fonction d'un courant d'un moteur du véhicule.

9. Procédé suivant l'une des revendications 1 à 8, **caractérisé en ce que**, si une valeur de seuil donnée à l'avance d'une masse totale donnée à l'avance du véhicule est dépassée, on émet un signal.

**IN DER BESCHREIBUNG AUFGEFÜHRTE DOKUMENTE**

**In der Beschreibung aufgeführte Patentdokumente**

- US 6249735 B1
- WO 03029764 A1
- DE 102006025329 B3